(19)

Europäisches
Patentamt
European
Patent Office
Office européen
des brevets

(11) **EP 4 653 078 A1**

(12) **EUROPEAN PATENT APPLICATION**
published in accordance with Art. 153(4) EPC

(43) Date of publication:
**26.11.2025 Bulletin 2025/48**

(21) Application number: **24784805.4**

(22) Date of filing: **27.03.2024**

(51) International Patent Classification (IPC):
*B01D 71/26* (2006.01)     *B01D 53/22* (2006.01)
*B01D 63/02* (2006.01)     *B01D 69/00* (2006.01)
*B01D 69/02* (2006.01)     *B01D 69/08* (2006.01)
*C08J 7/00* (2006.01)     *C08J 9/26* (2006.01)
*C08J 9/36* (2006.01)

(52) Cooperative Patent Classification (CPC):
**B01D 53/22; B01D 63/02; B01D 69/00;
B01D 69/02; B01D 69/08; B01D 71/26; C08J 7/00;
C08J 9/26; C08J 9/36**

(86) International application number:
**PCT/JP2024/012251**

(87) International publication number:
**WO 2024/210016 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2023 JP 2023061162**

(71) Applicant: **Toray Industries, Inc.
Tokyo 103-8666 (JP)**

(72) Inventors:
• **AOYAMA, Shigeru**
  **Otsu-shi, Shiga 520-8558 (JP)**
• **TAGUCHI, Marina**
  **Otsu-shi, Shiga 520-8558 (JP)**
• **AKUTSU, Miku**
  **Otsu-shi, Shiga 520-8558 (JP)**
• **MIHARA, Takaaki**
  **Otsu-shi, Shiga 520-8558 (JP)**

(74) Representative: **Prüfer & Partner mbB
Patentanwälte · Rechtsanwälte
Sohnckestraße 12
81479 München (DE)**

(54) **SEPARATION MEMBRANE, SEPARATION MEMBRANE MODULE, GAS SEPARATION METHOD, GAS SEPARATION DEVICE, AND SEPARATION MEMBRANE MANUFACTURING METHOD**

(57)     Provided are a separation membrane, a separation membrane module, a separation device, and a gas separation method which are excellent in productivity and processability and capable of effectively separating a gas having a high global warming potential. The present invention relates to a separation membrane containing a thermoplastic resin as a main component, in which an average pore diameter converted from an NKP plot is 0.1 nm to 0.6 nm.

Fig. 1

Membrane surface

5.00μm

EP 4 653 078 A1

## Description

### TECHNICAL FIELD

The present invention relates to a separation membrane, particularly a gas separation membrane capable of separating a gas having a high global warming potential, a gas separation membrane module, a gas separation method, a gas separation device, and a separation membrane manufacturing method.

### BACKGROUND ART

A membrane separation method is known as a gas separation method for selectively separating a specific gas from a mixture of various gases and purifying the gas. The membrane separation method is attracting attention because this method is an energy-saving technique as compared with other gas separation methods.

Examples of the gas having a high global warming potential include carbon dioxide, methane, fluorine-based gases such as perfluorocarbon (PFC), $SF_6$, hydrofluorocarbon (HFC), and $NF_3$, and chlorofluorocarbon gases (CFC). Among them, particularly, gases such as methane, PFC, $SF_6$, HFC, $NF_3$, and CFC have a higher global warming potential than carbon dioxide, but are used as gases indispensable in a wide range of fields such as in the semiconductor industry, metal refining, and electronic and electrical equipment. In the future, emissions of these gases are expected to increase year by year, particularly with an increase in the amount of emissions from the device manufacturing process of the semiconductor industry that continues to grow among developed countries, the spread of electronic and electrical equipment, and the mass disposal of used electrical products. Therefore, a technique for suppressing release of these gases into the atmosphere after use is required.

As means therefor, a thermal decomposition method at a high temperature is typical. However, this method has a problem that a large amount of energy is required. In addition, from the viewpoint of recycling resources and energy, consideration of recovery and reuse of fluorine-based gases is also an important issue. As means for solving these problems, a membrane separation method has been studied, and zeolite, a carbon-based membrane, a polyimide membrane, and the like have been proposed (Patent Documents 1, 2, and 3).

### PRIOR ART DOCUMENT

### PATENT DOCUMENTS

Patent Document 1: International Publication No. WO 2002/058826
Patent Document 2: Japanese Patent Laid-open Publication No. 11-345545
Patent Document 3: Japanese Patent Laid-open Publication No. 2000-185212

### SUMMARY OF THE INVENTION

### PROBLEMS TO BE SOLVED BY THE INVENTION

According to findings by the present inventors, all of these separation membranes have a problem of productivity and a problem of being expensive because these separation membranes undergo complicated steps using special raw materials. In particular, a zeolite membrane has poor processability, and has a problem that it is difficult to process the zeolite membrane into a desired shape.

In view of the above problems of the prior art, an object of the present inventors is to provide a separation membrane which is excellent in productivity and processability and capable of effectively separating a gas having a high global warming potential, and a separation membrane module, a gas separation method, and a gas separation device using the separation membrane.

### SOLUTIONS TO THE PROBLEMS

As a result of intensive studies to solve the above problems, the present inventors have found that a separation membrane having high productivity and high gas separation characteristics can be obtained by using a thermoplastic resin as a main component and having an average pore diameter converted from an NKP plot within a specific range, and have completed the present invention.

That is, the separation membrane of the present invention contains a thermoplastic resin as a main component, and has an average pore diameter converted from an NKP plot of 0.1 to 0.6 nm.

EFFECTS OF THE INVENTION

According to the present invention, a separation membrane having high productivity and high gas separation characteristics using a thermoplastic resin having excellent processability is provided.

BRIEF DESCRIPTION OF THE DRAWINGS

Fig. 1 is an example of an image obtained by imaging a cross section cut in a thickness direction of a separation membrane with a scanning electron microscope (hereinafter referred to as SEM) at a magnification of 10,000 times.
Fig. 2 is an image obtained by binarizing the image of Fig. 1 and then removing noise.
Fig. 3 shows a contour part and a dense layer thickness obtained by extracting only voids having a major axis of more than 10 nm from the image of Fig. 2.

EMBODIMENTS OF THE INVENTION

A separation membrane of the present invention contains a thermoplastic resin as a main component, and has an average pore diameter converted from an NKP plot of 0.1 to 0.6 nm. In the present description, the mass-based proportion (percentage, part, and the like) is the same as the weight-based proportion (percentage, part, and the like).

(Resin Composition Constituting Separation Membrane)

A resin composition constituting the separation membrane of the present invention contains a thermoplastic resin as a main component. The main component as used herein refers to a component included in the largest amount in terms of mass among all components included in the separation membrane. Preferable specific examples of the thermoplastic resin that can be the main component include: polyester-based resins such as polyethylene terephthalate, polyethylene-2,6-naphthalate, polypropylene terephthalate, and polybutylene terephthalate; polyolefin-based resins such as polyethylene, polystyrene, polypropylene, polyisobutylene, polybutene, polymethylpentene, and poly(4-methyl-1-pentene); polyamide-based resins; polyimide-based resins (excluding those not exhibiting thermoplasticity); polyether-based resins; polyesteramide-based resins; polyether ester-based resins; and acryl-based resins such as polymethyl methacrylate; polyurethane-based resins; polycarbonate-based resins; polyvinyl chloride-based resins; polyphenylene sulfide-based resins; polyether sulfone-based resins; polysulfone-based resins; and copolymers and mixtures thereof. Among them, polyester-based resins, polyolefin-based resins, polyamide-based resins, acryl-based resins, or mixtures thereof are particularly preferable from the viewpoint of molding processability and crosslinking reactivity upon irradiation with radiation, which will be described later. Polyolefin-based resins having an excellent balance between reactivity with radiation and mechanical properties, and resistance to methane and gases such as PFC, SF6, HFC, NF3, and CFC, are more preferable.
The resin composition constituting the separation membrane of the present invention preferably contains poly(4-methyl-1-pentene) represented by the following (1) as a main component. In addition to (1), components shown in the following (2) to (3) can be contained.

(1) Poly(4-methyl-1-pentene) (hereinafter referred to as "PMP")

The separation membrane of the present invention preferably contains PMP as a main component. The main component as used herein refers to a component included in the largest amount in terms of mass among all components included in the separation membrane.
PMP only needs to have a repeating unit derived from 4-methyl-1-pentene, and may be a homopolymer of 4-methyl-1-pentene or a copolymer with a monomer copolymerizable with 4-methyl-1-pentene other than 4-methyl-1-pentene. Specific examples of the monomer copolymerizable with 4-methyl-1-pentene include olefins having 2 to 20 carbon atoms other than 4-methyl-1-pentene.
Examples of the olefins having 2 to 20 carbon atoms copolymerized with 4-methyl-1-pentene include ethylene, propylene, 1-butene, 1-hexene, 1-heptene, 1-octene, 1-decene, 1-tetradecene, 1-hexadecene, 1-heptadecene, 1-octadecene, and 1-eicosene.
The olefins having 2 to 20 carbon atoms copolymerized with 4-methyl-1-pentene may be one kind of olefins or two or more kinds of olefins used in combination.

PMP used in the separation membrane of the present invention preferably has a density of 825 to 840 (kg/m$^3$), and more preferably 830 to 835 (kg/m$^3$). When the density is smaller than the above range, the mechanical strength of the separation membrane is reduced, which may lead to problems such as defects are likely to occur. Meanwhile, when the density is larger than the above range, gas permeability tends to decrease.

The melt flow rate (MFR) of PMP measured at 260°C under a load of 5 kg is not particularly limited as long as the PMP is easily mixed and can be coextruded with a plasticizer, which will be described later, and the MFR is preferably 1 to 200 g/10 min, and more preferably 5 to 30 g/10 min. When the MFR is in the above-described range, it is easy to perform extrusion molding to a relatively uniform membrane thickness.

PMP may be directly manufactured by polymerizing olefins, or may be manufactured by thermally decomposing a high molecular weight 4-methyl-1-pentene-based polymer. The 4-methyl-1-pentene-based polymer may be purified by a method such as solvent fractionation in which a difference in solubility with respect to a solvent is used for fractionation, or molecular distillation in which a difference in boiling point is used for fractionation.

In addition to PMP manufactured as described above, a commercially available polymer such as "TPX" manufactured by Mitsui Chemicals, Inc. may be used as PMP.

The content of PMP in the separation membrane is preferably 70 to 100 mass%, more preferably 80 to 100 mass%, and still more preferably 90 to 100 mass% with respect to 100 mass% of all components in the separation membrane. When the content of PMP in the separation membrane is 70 mass% or more, the gas permeability is sufficient.

The content of PMP in the raw material for manufacturing the separation membrane is preferably 10 to 50 mass% when the total of the components constituting the raw material is 100 mass%. When the content is 10 mass% or more, the membrane strength of the separation membrane is improved. Meanwhile, when the content is 50 mass% or less, the permeability of the separation membrane is improved. The content is more preferably 15 to 50 mass%, still more preferably 20 to 45 mass%, and particularly preferably 25 to 40 mass%.

(2) Plasticizer of Thermoplastic Resin

The plasticizer of the thermoplastic resin is not particularly limited as long as the plasticizer is a compound that plasticizes the thermoplastic resin. As the plasticizer for the thermoplastic resin, not only one type of plasticizer but also two or more types of plasticizers may be used in combination.

In particular, examples of the plasticizer when the thermoplastic resin contains PMP as a main component include palm kernel oil, dibutyl phthalate, dioctyl phthalate, dibenzyl ether, coconut oil, and mixtures thereof. Among them, dibutyl phthalate and dibenzyl ether are preferably used from the viewpoint of compatibility and spinnability.

As a step of manufacturing the separation membrane of the present invention, first, a resin mixture containing a thermoplastic resin and a plasticizer is melt-kneaded, for example, to obtain a "resin composition". The content of the plasticizer of the thermoplastic resin in the resin composition is preferably 50 mass% or more and 90 mass% or less when the total amount of the components constituting the resin composition is 100 mass%.

When the content is 90 mass% or less, the membrane strength of the separation membrane is improved. When the content is 50 mass% or more, the permeability of the separation membrane is improved. The content is more preferably 50 mass% or more and 85 mass% or less, still more preferably 55 mass% or more and 80 mass% or less, and particularly preferably 60 mass% or more and 75 mass% or less.

Next, the resin composition is melted, discharged from a discharge spinneret or the like, and then cooled, and the like, thereby obtaining a "resin molded product". The plasticizer of the thermoplastic resin is preferably eluted from the resin molded product. The content of the plasticizer in the resin molded product after elution from the thermoplastic resin, that is, the content of the plasticizer in the separation membrane of the present invention is preferably 1,000 ppm or less, more preferably 500 ppm or less, and particularly preferably 100 ppm or less on a mass basis from the viewpoint of enhancing the permeability of the separation membrane.

(3) Additive

The resin molded product constituting the separation membrane of the present invention may contain an additive other than those described in (2) as long as an effect of the present invention is not impaired.

Examples of the additive include resins other than the main thermoplastic resin, such as cellulose ethers, polyacrylonitrile, polyolefins, polyvinyl compounds, polycarbonates, poly(meth)acrylates, polysulfone or polyethersulfone; organic lubricants; crystal nucleating agents; organic particles; inorganic particles; end-capping agents; chain extenders; ultraviolet absorbers; infrared absorbers; coloring inhibitors; matting agents; antibacterial agents; electrostatic removers; deodorants; flame retardants; weathering agents; antistatic agents; antioxidants; ion exchangers; antifoaming agents; coloring pigments; optical brighteners; or dyes.

(Shape of Separation Membrane)

As the shape of the separation membrane of the present invention, a separation membrane having a hollow fiber shape (hereinafter referred to as "hollow fiber membrane") is preferable. The hollow fiber membrane is preferable because the hollow fiber membrane can be efficiently filled into a module to increase an effective membrane area per unit volume of the module.

For the shape of the separation membrane in the present invention, that is, the thickness of the separation membrane, the outer diameter and inner diameter of the hollow fiber membrane, and the hollowness can be observed using an optical microscope or an SEM, for example, by applying stress to the hollow fiber membrane sufficiently cooled in liquid nitrogen to cut the hollow fiber membrane in the thickness direction of the membrane and observing the cross section (hereinafter referred to as a "radial cross section") can be observed. A specific method will be described in detail in Examples.

The thickness of the separation membrane is preferably 10 to 500 $\mu$m from the viewpoint of achieving both permeability and membrane strength. The thickness is more preferably 30 $\mu$m or more, and still more preferably 50 $\mu$m or more. The thickness is more preferably 200 $\mu$m or less, still more preferably 150 $\mu$m or less, and particularly preferably 100 $\mu$m or less.

The outer diameter of the hollow fiber membrane is preferably 50 to 2,500 $\mu$m from the viewpoint of achieving both the effective membrane area of a module filled with the hollow fiber membrane and the membrane strength. The outer diameter of the hollow fiber membrane is more preferably 100 $\mu$m or more, still more preferably 200 $\mu$m or more, and particularly preferably 300 $\mu$m or more. The outer diameter is more preferably 1,000 $\mu$m or less, still more preferably 500 $\mu$m or less, and particularly preferably 450 $\mu$m or less.

From the relationship between the pressure loss of the fluid flowing through the hollow portion and the buckling pressure, the inner diameter of the hollow fiber membrane is preferably 20 to 1,000 $\mu$m. The inner diameter of the hollow fiber membrane is more preferably 50 $\mu$m or more, still more preferably 100 $\mu$m or more, and particularly preferably 150 $\mu$m or more. The inner diameter is more preferably 500 $\mu$m or less, still more preferably 300 $\mu$m or less, and particularly preferably 250 $\mu$m or less.

From the relationship between the pressure loss of the fluid flowing through the hollow portion and the buckling pressure, the hollowness of the hollow fiber membrane is preferably 15 to 70%. The hollowness is more preferably 20% or more, and still more preferably 25% or more. The hollowness is more preferably 60% or less, still more preferably 50% or less, and particularly preferably 40% or less.

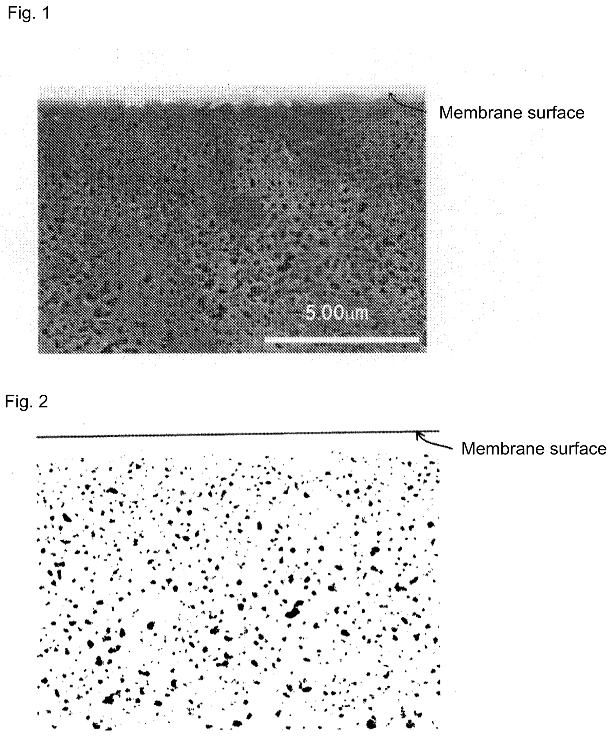

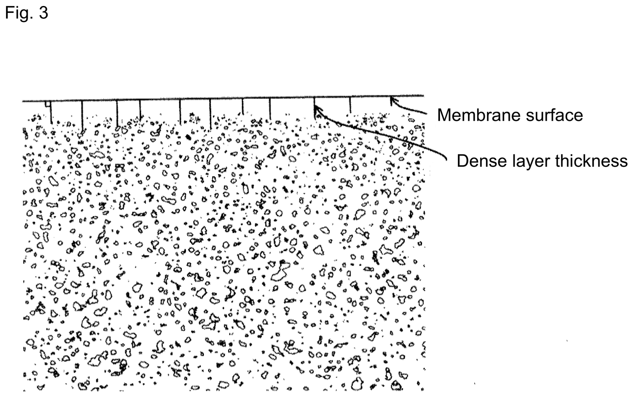

Fig. 1 shows an example of a 10,000 times SEM image of a cross section obtained by cutting the separation membrane in the thickness direction, Fig. 2 shows an image obtained by removing noise in the image of Fig. 1 and binarizing the image, and Fig. 3 shows the contour part and the dense layer thickness obtained by extracting only voids having a major axis larger than 10 nm from the image of Fig. 2, respectively.

The method of setting the outer diameter, the inner diameter, and the hollowness of each of the hollow fiber membranes within the above-described ranges is not particularly limited, and can be adjusted, for example, by appropriately changing the shape of the discharge pore of the spinneret for manufacturing the hollow fiber, or the draft ratio that can be calculated by the winding rate/the discharge rate.

As described later, the hollow fiber membrane of the present embodiment can be manufactured by forming a hollow fiber from a membrane-forming stock solution containing a polymer, and furthermore, high selectivity can be obtained by irradiating the membrane with radiation.

(Average Pore Diameter Converted from NKP Plot)

It is important that the separation membrane of the present invention has an average pore diameter converted from the NKP plot of 0.1 nm or more and 0.6 nm or less. When the average pore diameter converted from the NKP plot is 0.1 nm or more, permeability is improved, and when the average pore diameter is 0.6 nm or less, permeation of methane and gases such as PFC, $SF_6$, HFC, $NF_3$, and CFC can be suppressed, and a separation membrane with high selectivity can be obtained. The average pore diameter converted from the NKP plot is preferably 0.30 to 0.58 nm, more preferably 0.35 to 0.55 nm, still more preferably 0.40 to 0.53 nm, and particularly preferably 0.45 to 0.53 nm. The average pore diameter converted from the NKP plot can be estimated by Normalized Knudsen-based Permeance (NKP) as described in the literature (Membrane. 2011, 383, 152-158.). The formula defined by NKP, when using He as the reference, is represented by the following Formula (1), based on the molecular dependence of the gas-permeable coefficient at any temperature at a single point, in cases where there is no significant difference in the activation energy among the gas species.

[Mathematical Formula 1]

$$\frac{P_i}{P_{He}}\sqrt{\frac{M_i}{M_{He}}} = \frac{(d_P - d_i)^3}{(d_P - d_{He})} \quad \cdots \cdots \cdot \text{Formula (1)}$$

[Mathematical Formula 2]

$$P_i[mol/m \cdot s \cdot Pa] = \frac{J \times d}{(P_H - P_L)} \quad \cdots \cdots \cdot \text{Formula (2)}$$

Here, $P_i$ is a gas-permeable coefficient of the component i represented by Formula (2), J is a gas flux, d is a membrane thickness, and $P_H$ and $P_L$ are partial pressures on a gas supply side and a gas permeation side, respectively. In addition, $M_i$ is the molecular weight of the component i, $M_{He}$ is the molecular weight of He, $d_p$ is the average pore diameter converted from the NKP plot, $d_i$ is the molecular diameter of the component i, $d_{He}$ is the molecular diameter of He, and the value of $P_i/P_{He}$ can be replaced with a separation factor $\beta$ (i/He) of the component i and He, which will be described later. The gas species used as the component i is not limited as long as there is no large difference in activation energy, but for example, $H_2$, $O_2$, $N_2$, $CH_4$, or the like is suitably used. In the present invention, $N_2$ was used because of easy availability of gas and handleability. In addition, since the formula used for the calculation this time is a formula suitable only for a separation membrane having selectivity due to the molecular sieving effect, the formula is applied only to a separation membrane having no coarse pores on the outer surface, that is, a separation membrane in which surface pores are not confirmed by surface observation such as SEM. In the present invention, the average pore diameter means a value obtained by rounding off the average pore diameter to two decimal places.

(Dense Layer of Separation Membrane)

The separation membrane of the present embodiment preferably includes a dense layer in at least one surface layer. In the case of the hollow fiber membrane, the dense layer may be present on the outer surface side, or may be present on the inner surface side, or may be present on both the outer surface and the inner surface. However, when the average pore diameter $D_i$ described later satisfies (a) $D_1 \geq D_2 \geq D_3 \geq D_4 \geq D_5$ or (b) $D_5 \geq D_4 \geq D_3 \geq D_2 \geq D_1$, the dense layer is preferably present on the surface of $D_5$ in (a) or $D_1$ in (b). By having the dense layer on the surface of $D_5$ in (a) or $D_1$ in (b), defects of the dense layer can be suppressed, and low leakage properties can be provided. When the separation membrane has a hollow fiber shape, it is more preferable to have a dense layer on the outer surface of the separation membrane. By having the dense layer on the outer surface of the separation membrane, the effective membrane area per unit volume of the module can be increased.

The dense layer refers to a portion that reaches a pore having a major axis of more than 10 nm for the first time when a straight line is drawn perpendicularly to the outer surface from any point on the outer surface of the separation membrane toward the inner surface side or from the inner surface toward the outer surface in the case of a hollow fiber membrane, and refers to a portion that reaches a pore having a major axis of more than 10 nm for the first time when a line is drawn perpendicularly to the sheet surface direction from either one surface toward the other surface in the case of a sheet-like membrane, when observed at a magnification of 10,000 using an SEM. For example, the thickness of the dense layer can be obtained by applying stress to a hollow fiber membrane sufficiently cooled in liquid nitrogen (using a razor or microtome or a broad ion beam as necessary), observing a radial cross section or a cross section perpendicular to a longitudinal cross section, that is, a cross section parallel to the longitudinal direction of the separation membrane (hereinafter referred to as a "longitudinal cross section") using an SEM, binarizing the obtained image with image analysis software "ImageJ", extracting only pores having a major axis of more than 10 nm, drawing a straight line perpendicular to the outer surface, and measuring the distance to the pores. In addition, in the case of a sheet-like membrane, the thickness of the dense layer can be similarly obtained by SEM observation and analysis of a cross section parallel to a direction in which the Young's modulus of the sheet is the highest, which is obtained by applying stress in the same manner. A specific measurement method will be described in detail in Examples.

The thickness of the dense layer is preferably 0.1 to 2.0 $\mu$m. When the thickness of the dense layer is 0.1 $\mu$m or more, the low leakage properties are improved, and when the thickness is 2.0 $\mu$m or less, the permeability is improved.

The thickness of the dense layer is more preferably 0.1 to 1.5 $\mu$m. The thickness of the dense layer is still more preferably 0.1 to 1.0 $\mu$m, and particularly preferably 0.1 to 0.4 $\mu$m.

(Viscoelastic Properties)

Preferably, in the separation membrane of the present invention, in the dynamic mechanical analysis (hereinafter referred to as DMA), when measurement is performed while a frequency is changed in a range of 1 to 100 Hz, a slope A of a logarithmic approximation obtained from a frequency F and a tan$\delta$ peak temperature T plot is 1.4 or more.

Specifically, the slope A mentioned here is a value obtained by the following procedures (1) to (3).

(1) The frequency dependence (frequency dispersion, driving frequency: 1 to 100 Hz) of dynamic viscoelasticity is measured by a method in accordance with JIS K-7244-4 (1999) under the measurement conditions of a tensile mode, a distance between chucks of 10 mm, a strain of 0.02 to 0.05%, a temperature raising rate of 3°C/min, and a temperature range of 0 to 150°C.

(2) The temperature at which tan$\delta$ becomes maximum at each frequency is determined, and the frequency F is plotted on the horizontal axis and the tan$\delta$ maximum temperature T is plotted on the vertical axis. When there is a plurality of maximum temperatures, the temperature at which the maximum value (peak height) of tan$\delta$ is the largest is defined as T.

(3) A logarithmic approximation Formula ($T = A \times \log_e (F) + B$) is obtained from the obtained plot, and the slope A of the formula is obtained.

The slope A obtained by the above-described procedure is particularly correlated with the mobility of the amorphous phase among the crystal phase and the amorphous phase of the polymer constituting the separation membrane, and the larger the slope A is, the lower the mobility of the amorphous phase is. Gases having a high global warming potential, such as methane, PFC, $SF_6$, HFC, $NF_3$, and CFC, easily permeate through the membrane through the amorphous phase part, but in a state where the slope A is 1.4 or more, the mobility of the amorphous phase decreases, and accordingly, these permeabilities can be reduced, and the selective separability can be increased. The slope A is more preferably 1.5 or more, still more preferably 2.0 or more, and particularly preferably 2.5 or more. Note that the upper limit of the slope A is not particularly limited, but is substantially 20. In order to set the slope A to 1.4 or more, the slope A can be obtained by increasing the heating temperature or increasing the relaxation ratio in a heating step which will be described later, or by adjusting the irradiation intensity, the irradiation amount, and the like in a radiation exposure step.

In the separation membrane of the present invention, the temperature at which tan$\delta$ becomes maximum when measured at a frequency of 10 Hz in the DMA is preferably the glass transition temperature Tg + 1°C or more of the main thermoplastic resin. The temperature is more preferably Tg + 3°C or more, and still more preferably Tg + 4°C or more. The upper limit of the temperature at which tan$\delta$ becomes maximum when measured at a frequency of 10 Hz is not particularly limited, but is substantially Tg + 60°C. When the main component of the thermoplastic resin is PMP, the temperature at which tan$\delta$ becomes maximum when measured at a frequency of 10 Hz in the DMA is preferably 48°C or more. The temperature is more preferably 50°C or more, and still more preferably 51°C or more. The upper limit of the temperature at which tan$\delta$ becomes maximum when measured at a frequency of 10 Hz is not particularly limited, but is substantially 100°C. Within this range, the polymer constituting the separation membrane can be further constrained, and as a result, the permeability of a gas having a high global warming potential, such as methane, PFC, $SF_6$, HFC, $NF_3$, or CFC, can be reduced, and the selective separability can be increased.

In the separation membrane of the present invention, the width at the 3/4 position from the tan$\delta$ peak height when measured at a frequency of 10 Hz in the above-described DMA is preferably at least +2°C greater than the width at the 3/4 position from the tan$\delta$ peak height of the main thermoplastic resin. The width is more preferably at least +3°C or greater than the width at the 3/4 position from the tan$\delta$ peak height of the main thermoplastic resin, and still more preferably at least +4°C greater than the width at the 3/4 position from the tan$\delta$ peak height of the main thermoplastic resin. The upper limit of the width at the position 3/4 from the tan$\delta$ peak height is not particularly limited, but is substantially +60°C greater than the width at the 3/4 position from the tan$\delta$ peak height of the main thermoplastic resin. When the main component of the thermoplastic resin is PMP, the width at the 3/4 position from the tan$\delta$ peak height when measured at a frequency of 10 Hz in the above-described DMA is preferably 19°C or more. The width is more preferably 20°C or more, still more preferably 21°C or more. The upper limit of the width at the 3/4 position from the tan$\delta$ peak height is not particularly limited, but is substantially 80°C. Within this range, the polymer constituting the separation membrane can be further constrained, and as a result, the permeability of a gas having a high global warming potential, such as methane, PFC, $SF_6$, HFC, $NF_3$, or CFC, can be reduced, and the selective separability can be increased. In order for the width at the 3/4 position from the tan$\delta$ peak height to be at least +2°C greater than the width at the position 3/4 from the tan$\delta$ peak height of the main thermoplastic resin, and at least 19°C when the main component of the thermoplastic resin is PMP, the heating temperature may be increased or the relaxation ratio may be increased in the heating step which will be described later, or the irradiation intensity, the irradiation amount, and the like may be adjusted in the radiation exposure step, and the like.

(Porosity)

The separation membrane of the present invention preferably has a porosity of 40% to 70%. When the porosity is 40% or more, the permeability is improved, and when the porosity is 70% or less, the membrane strength is improved. 45 to 60% is preferable, and 53 to 60% is particularly preferable. In order to obtain a porosity in such a range, structure formation using thermally induced phase separation which will be described later is preferably used. The porosity of the present invention refers to the porosity of the entire separation membrane, and a specific method for measuring the porosity will be described in detail in Examples.

(Pore Structure of Separation Membrane)

In the separation membrane of the present embodiment, all the values of the variation coefficient $\alpha_i$ of the average pore diameter $D_i$ are preferably 150% or less. The average pore diameter $D_i$ is an average pore diameter in each region when each region obtained by dividing the separation membrane into five regions at equal intervals in order from one surface of the separation membrane in the thickness direction in order from the outer surface toward the inner surface is defined as 1 to 5, and the average pore diameters of each region are indicated as $D_1$, $D_2$, $D_3$, $D_4$, and $D_5$. The average pore diameter $D_i$ can be obtained, for example, by exposing the radial cross section of the hollow fiber membrane sufficiently cooled in liquid nitrogen using a microtome, then observing the radial cross section using an SEM, binarizing the obtained image with image analysis software "ImageJ", and then extracting only pores having an average diameter of more than 10 nm. The regions to be observed are five regions obtained by dividing the radial cross section into five regions at equal intervals in order in the thickness direction such that each surface of the separation membrane is an end portion when observed using an SEM. The variation coefficient $\alpha_i$ is a value obtained by dividing the standard deviation of the pore diameters of all the pores observed in a specific region by the average pore diameter $D_i$ and multiplying the obtained value by 100. When the variation coefficient is 150% or less, since the pore diameter is uniform in the region, it is possible to suppress local liquid leakage due to coarse pores and to achieve both permeability and low leakage properties. The variation coefficient is preferably 120% or less, more preferably 100% or less, and particularly preferably 80% or less. The lower limit of the variation coefficient is not particularly limited, but is substantially 0%. The average pore diameter $D_i$ is preferably 100 to 1,000 nm. When the average pore diameter $D_i$ is 100 nm or more, the permeability is improved, and when the average pore diameter $D_i$ is 1,000 nm or less, the strength of the separation membrane is improved. The average pore diameter $D_i$ is preferably 120 to 800 nm, more preferably 150 to 600 nm, still more preferably 170 to 400 nm, and particularly preferably 200 to 300 nm. A method for measuring the average pore diameter $D_i$ will be described in detail in Examples.
In the separation membrane of the present invention, the above-described average pore diameter $D_i$ preferably satisfies the following requirement (a) or (b).

$$(a)\ D_1 \geq D_2 \geq D_3 \geq D_4 \geq D_5$$

$$(b)\ D_5 \geq D_4 \geq D_3 \geq D_2 \geq D_1$$

By increasing or decreasing the average pore diameter $D_i$ in a stepwise manner toward either one surface, that is, the outer surface or the inner surface, it is possible to perform uniform separation, suppress local liquid leakage due to coarse pores, and achieve both permeability and low leakage properties.

(Void Larger Than 10 $\mu$m in Support Layer)

In the separation membrane of the present embodiment, the number of voids larger than 10 $\mu$m in the support layer is preferably 3 or less. The support layer is a layer excluding a dense layer when the hollow fiber membrane has the dense layer, and has a plurality of voids. A void refers to a recess portion having a diameter of more than 10 nm when the support layer in the radial cross section or the longitudinal cross section of the hollow fiber membrane is observed at a magnification of 2,000 times using an SEM. The plurality of voids refers to 10 or more voids per visual field when the support layer in the radial cross section or the longitudinal cross section is observed at a magnification of 2,000 times using an SEM. When the number of voids larger than 10 $\mu$m in the support layer is 3 or less, the strength of the hollow fiber membrane is improved. The voids of 10 $\mu$m or more in the support layer can be obtained by applying stress to the hollow fiber membrane sufficiently cooled in liquid nitrogen (using a razor or a microtome or a broad ion beam as necessary), observing the radial cross section or the longitudinal cross section using an SEM, binarizing the obtained image with image analysis software "ImageJ", and then extracting only pores having an average diameter larger than 10 $\mu$m. The number of voids larger than 10 $\mu$m in the support layer is more preferably 2 or less, still more preferably 1 or less, and particularly preferably 0. A method for measuring voids larger than 10 $\mu$m in the support layer will be described in detail in Examples.

(Average Porosity of Cross Section)

The average porosity of the cross section of the separation membrane of the present invention is preferably 25 to 50%. The average porosity of the cross section can be obtained by exposing the radial cross section of the hollow fiber membrane sufficiently cooled in liquid nitrogen using a microtome, then observing the radial cross section with an SEM, binarizing the obtained image with image analysis software "ImageJ", and then calculating the ratio of pores having a diameter of more than 10 nm relative to the visual field area. When the average porosity of the cross section is 25% or more, the permeability is improved, and when the average porosity is 50% or less, the strength of the separation membrane is improved. The average porosity of the cross section is preferably 30 to 45%, and more preferably 35 to 40%. A specific method for measuring the average porosity of the cross section will be described in detail in Examples.

(Separation Factor $\beta$ ($N_2/SF_6$))

The separation membrane of the present invention preferably has a ratio of $N_2$ permeability to $SF_6$ permeability (separation factor $\beta$ ($N_2/SF_6$)) of 10 or more at 100 kPa and 37°C. The separation factor $\beta$ ($N_2/SF_6$) is preferably 20 or more, more preferably 30 or more, further preferably 9.40 or more, and particularly preferably 50 or more. The calculation method will be described in detail in Examples. In the separation membrane of the present invention, it is easy to more efficiently separate a gas having a high global warming potential by setting the separation membrane to the above range. In order to set the separation factor $\beta$ ($N_2/SF_6$)) to 10 or more, it is possible to obtain the separation factor $\beta$ ($N_2/SF_6$) by increasing the heating temperature or increasing the relaxation ratio in a heating step which will be described later, or by adjusting the irradiation intensity, the irradiation amount, and the like in a radiation exposure step. Although higher separation factor $\beta$ is preferable and no upper limit is strictly defined, the substantial upper limit is 1,000.

(Gas Permeability)

The separation membrane of the present invention preferably has $N_2$ permeability of 5 GPU or more at 100 kPa and 37°C. The $N_2$ permeability is more preferably 10 GPU or more, still more preferably 20 GPU or more, particularly preferably 30 GPU or more, and more particularly preferably 40 GPU or more. The calculation method will be described in detail in Examples. In the separation membrane of the present invention, it is easy to more efficiently separate a gas having a high global warming potential by setting the separation membrane to the above range. In order to set the $N_2$ permeability to 10 GPU or more, it is possible to obtain the $N_2$ permeability by setting the air gap section to 30 to 80 mm in a molding step which will be described later, using a washing solvent having a solubility parameter distance Ra to the thermoplastic resin of 8 or more in a washing step, or adjusting the irradiation intensity and the irradiation amount in a radiation crosslinking step. Although higher $N_2$ permeability is preferable and no upper limit is strictly defined, considering compatibility with the selectivity $\beta$, the substantial upper limit is 500 GPu.

(Separation Membrane Manufacturing Method)

An example of a separation membrane manufacturing method of the present invention is shown below. The method includes steps (1) to (4).

(1) A preparation step of melt-kneading a resin mixture including 10 mass% or more and 50 mass% or less of a thermoplastic resin, and 50 mass% or more and 90 mass% or less of a plasticizer to obtain a resin composition.
(2) A molding step of melting the resin composition, discharging the resin composition from a discharge spinneret, and cooling the resin composition in a cooling bath to obtain a resin molded product.
(3) A washing step of extracting the plasticizer contained in the resin molded product with a solvent to obtain a resin molded product from which the plasticizer has been removed.
(4) A radiation exposure step of irradiating the resin molded product from which the plasticizer has been removed with radiation.

Next, the separation membrane manufacturing method of the present invention will be specifically described with reference to an example of a case where the separation membrane is a hollow fiber membrane.

(Preparation Step)

In the preparation step in which a resin composition for manufacturing the separation membrane of the present invention is obtained, a mixture containing 10 to 50 mass% of a thermoplastic resin and 50 to 90 mass% of a plasticizer is melt-kneaded. The mixture preferably contains 15 to 50 mass% of thermoplastic resin and 50 to 85 mass% of a plasticizer, more preferably 20 to 45 mass% of a thermoplastic resin and 55 to 80 mass% of a plasticizer, and particularly preferably 25 to 40 mass% of a thermoplastic resin and 60 to 75 mass% of a plasticizer.

As a device used for melt-kneading the mixture, a kneader, a roll mill, a Banbury mixer, or a mixer such as a uniaxial extruder or a twin-screw extruder can be used. Among them, a twin-screw extruder is preferably used from the viewpoint of improving the uniform dispersibility of the plasticizer, and a twin-screw extruder with a vent pore is more preferably used from the viewpoint of capability of removing a volatile such as moisture or a low molecular weight substance. From the viewpoint of enhancing the kneading strength and improving the uniform dispersibility of the plasticizer, a twin-screw extruder with a screw having a kneading disk part is preferably used.

The resin composition obtained in the preparation step may be pelletized once and melted again for use in melt membrane formation, or may be directly introduced into a spinneret for use in melt membrane formation. In a case where the resin composition is pelletized once, it is preferable to dry the pellet to adjust the water content to 200 ppm (mass basis) or less and use the obtained resin composition. When the water content is 200 ppm (mass basis) or less, deterioration of the resin can be suppressed.

(Molding Step)

In the molding step of forming a hollow fiber membrane, a hollow fiber membrane is obtained from a molten mixture of a thermoplastic resin and a plasticizer, that is, a resin composition, using phase separation. Specifically, the step is a step of discharging the resin composition obtained in the preparation step into a gas atmosphere from, for example, a discharge spinneret having a double annular nozzle in which a gas flow path is disposed in a central portion, and introducing the resin composition into a cooling bath to phase-separate the resin composition to obtain a resin molded product.

As a specific method, the hollow portion forming gas is discharged from the inner ring of the double tubular spinneret while the resin composition in a molten state is discharged from the tube outside the double annular nozzle for spinning. The resin composition thus discharged is allowed to run in the gas atmosphere, and then cooled and solidified in a cooling bath to obtain a resin molded product.

Here, the cooling bath for cooling the resin composition discharged from the discharge spinneret will be described. It is important to select the solvent of the cooling bath from the affinity between the thermoplastic resin and the plasticizer. As the solvent of the cooling bath, a solvent having a solubility parameter distance Ra to the thermoplastic resin in the range of 5.0 to 18.0 MPa$^{1/2}$ and a solubility parameter distance Rb to the plasticizer in the range of 1.0 to 2.9 MPa$^{1/2}$ or 6.5 to 10.0 MPa$^{1/2}$ is preferably used for the cooling bath. When Ra and Rb are in the above range, the size of the micropores in the dense layer can be controlled, and both high permeability and selective permeability can be achieved. As a reason for this, it is estimated that solidification occurs before crystallization or aggregation of the thermoplastic resin when Ra is in the range of 5.0 to 18.0 MPa$^{1/2}$, and exchange of the solvent and the plasticizer is performed at an appropriate speed when Rb is in the range of 1.0 to 2.9 or 6.5 to 10.0 MPa$^{1/2}$, and thus it is possible to form micropores through which only gas can pass while suppressing coarse pores that cause leakage of liquid. It is more preferable to use a solvent in which Ra is in the range of 5.0 to 7.0 MPa$^{1/2}$ and Rb is in the range of 6.5 to 10.0 MPa$^{1/2}$ for the cooling bath.

The affinity between the thermoplastic resin and the solvent can be estimated by the three-dimensional Hansen solubility parameter as described in the literature (Ind. Eng. Chem. Res. 2011, 50, 3798-3817.). Specifically, the smaller the solubility parameter distance (Ra) in the following Formula (3), the higher the affinity between the solvent and the thermoplastic resin.

[Mathematical Formula 3]

$$\mathrm{Ra} = \sqrt{4(\delta_{Ad} - \delta_{Cd})^2 + \left(\delta_{Ap} - \delta_{Cp}\right)^2 + \left(\delta_{Ah} - \delta_{Ch}\right)^2} \quad \cdots\cdots\cdot \mathrm{Formula\ (3)}$$

Here, $\delta_{Ad}$, $\delta_{Ap}$, and $\delta_{Ah}$ are a dispersion term, a polarity term, and a hydrogen bond term of the solubility parameter of the thermoplastic resin, and $\delta_{Cd}$, $\delta_{Cp}$, and $\delta_{Ch}$ are a dispersion term, a polarity term, and a hydrogen bond term of the solubility parameter of the solvent.

The affinity between the plasticizer and the cooling solvent can also be estimated in the same manner. Specifically, the smaller the solubility parameter distance (Rb) in the following Formula (4), the higher the affinity between the solvent and the plasticizer.

[Mathematical Formula 4]

$$\mathrm{Rb} = \sqrt{4(\delta_{Bd} - \delta_{Cd})^2 + \left(\delta_{Bp} - \delta_{Cp}\right)^2 + \left(\delta_{Bh} - \delta_{Ch}\right)^2} \quad \cdots\cdots\cdot \mathrm{Formula\ (4)}$$

Here, $\delta_{Bd}$, $\delta_{Bp}$, and $\delta_{Bh}$ are a dispersion term, a polarity term, and a hydrogen bond term of the solubility parameter of the thermoplastic resin, and $\delta_{Cd}$, $\delta_{Cp}$, and $\delta_{Ch}$ are a dispersion term, a polarity term, and a hydrogen bond term of the solubility parameter of the solvent.

In a case where the solvent is a mixed solvent, the solubility parameter ($\delta_{Mixture}$) of the mixed solvent can be determined with the following Formula (5).

[Mathematical Formula 5]

$$\delta_{Mixture} = \sum \Phi_i \delta_i \quad \cdots \cdots \text{Formula (5)}$$

Here, $\varphi_i$ and $\delta_i$ are a volume fraction and a solubility parameter of the component i, and satisfy a dispersion term, a polarity term, and a hydrogen bond term, respectively. Here, the "volume fraction of the component i" refers to the ratio of the volume of the component i before mixing to the sum of the volumes of all the components before mixing. As the three-dimensional Hansen solubility parameter of the solvent, this value was used when it is described in the literature (Ind. Eng. Chem. Res. 2011, 50, 3798-3817.). For solvent parameters not described, values contained in the software "Hansen Solubility Parameter in Practice" developed by Charles Hansen et al. were used. The three-dimensional Hansen solubility parameter of a solvent or a polymer not described in the software can be calculated with the Hansen sphere method using the software.

In the separation membrane manufacturing method of the present application, the solvent used in the cooling bath in the forming step is not particularly limited, as long as the solvent is in the above range, but when the thermoplastic resin contains PMP as a main component and dibutyl phthalate is used as a plasticizer, triacetin, dimethyl phthalate, and $\gamma$-butyllactone are preferable, and among them, triacetin is more preferable because Ra and Rb are within the above more preferable ranges.

The cooling bath to be used is preferably 15 to 45°C. When the temperature is 15°C or more, a rapid temperature change is suppressed, winding is stabilized, and fluctuation of the yarn shape is reduced. Meanwhile, when the temperature is 45°C or less, excessive crystallization can be suppressed, and permeability can be improved. The cooling bath temperature is preferably 15 to 40°C, and more preferably 15 to 25°C.

In addition, the resin composition discharged from the discharge spinneret is preferably exhausted at a wind speed of 8 to 20 m/s in order to promote evaporation of the plasticizer before cooling with a cooling bath on at least one surface thereof, preferably a surface on which a dense layer is to be formed. By exhausting air at a wind speed of 8 to 20 m/s, the evaporated plasticizer is immediately exhausted, and thus liquefaction of the plasticizer while adhering to the membrane surface is suppressed, and a dense layer having appropriate micropores can be formed when the membrane is cooled in the above-described cooling bath. The exhaust airflow velocity is preferably 8 to 17 m/s, and more preferably 10 to 14 m/s. The gas used in the gaseous atmosphere of the exhaust section is not particularly limited, and air or nitrogen is preferably used. The gaseous atmosphere generally has a temperature lower than the discharge spinneret temperature. In addition, it is preferable that the resin composition discharged from the discharge spinneret is introduced into the cooling bath after passing through the air gap zone having a distance of 30 to 80 mm from the spinneret surface to the solvent surface. By passing through the air gap zone of 30 to 80 mm, the dense layer thickness layer becomes favorable. The air gap zone refers to a space from the spinneret surface to the solvent surface of the cooling bath. In the present application, the "distance from the spinneret surface to the solvent surface" may be referred to as "air gap distance".

The air gap distance is preferably 30 to 70 mm, more preferably 35 to 60 mm, and particularly preferably 40 to 50 mm.

In the molding step for manufacturing the separation membrane of the present invention, the resin composition discharged from the discharge spinneret is wound up by a winding device. In this case, the value of the draft ratio calculated by (winding rate)/(discharge rate from discharge spinneret) by the winding device is preferably 3.0 to 20.0. When the draft ratio is 3.0 or more, winding is stabilized, and fluctuation in the yarn shape is reduced. When the draft ratio is 20.0 or less, excessive stretching of the resin composition discharged from the spinneret can be suppressed, and leakage due to generation of a defect in the dense layer can be suppressed. The draft ratio is preferably 3.0 to 10.0, and more preferably 4.5 to 8.0.

(Washing Step)

By immersing the thus obtained resin composition in a solvent that does not dissolve the thermoplastic resin but is miscible with the plasticizer, and thereby undergoing a step of eluting the plasticizer, the porosity can be increased. At this time, by using a solvent or a mixed solvent having appropriate affinity with the plasticizer, good solvent exchange is performed, and the washing efficiency is increased. The solvent that does not dissolve the polymer used here is not particularly limited as long as the solvent is a solvent miscible with the plasticizer, but it is preferable to use a solvent having Ra in the range of 8 to 35 and a solubility parameter distance Rb to the plasticizer in the range of 5 to 35. At this time, by using a solvent or a mixed solvent having appropriate affinity with each of the polymer and the plasticizer, good solvent exchange is performed without generating defects on the membrane surface, and the washing efficiency is increased.

When the solubility parameter distance Ra of the washing solvent to the thermoplastic resin is 8 or more, the shape stability of the resin composition is improved, and when the solubility parameter distance Ra is 35 or less, the resin composition is moderately swollen, and the washing efficiency is high. The range of Ra is preferably 10 to 25, and particularly preferably 12 to 22. When the solubility parameter distance Rb of the washing solvent with respect to the plasticizer is 35 or less, good solvent exchange is performed, and the washing efficiency is increased. The range of Rb is preferably 10 to 25, and particularly preferably 12 to 22.

The solvent used in the washing step is not particularly limited as long as the solvent is in the above range, but when the thermoplastic resin contains PMP as a main component and dibutyl phthalate is used as a plasticizer, methanol, ethanol, isopropyl alcohol, acetone, and acetonitrile are preferable, and among them, methanol, ethanol, and isopropyl alcohol are more preferable since Ra and Rb are within the above-described particularly preferable ranges.

A resin molded product from which a plasticizer is removed is obtained by this washing step, but the "resin molded product from which a plasticizer is removed" of the present invention also includes a resin molded product from which a plasticizer is not completely removed and remains.

(Heating Step)

Preferably, a heating step of heating to a temperature equal to or more than the glass transition temperature of the thermoplastic resin is provided after the washing step and before the radiation exposure step which will be described later. By this heating step, not only can the solvent adhering in the washing step be efficiently removed and dried, and the internal stress remaining in the membrane in the molding step and the washing step described above be relaxed to enhance the dimensional stability of the membrane, but also the crosslinking reactivity in the radiation exposure step which will be described later can be enhanced. Specifically, the treatment is preferably performed at room temperature to the glass transition temperature Tg of the thermoplastic resin +120°C, and when the thermoplastic resin contains PMP as a main component, the treatment is preferably performed at room temperature to 150°C.

After the heating, cooling is performed, and in this case, it is preferable to relax the separation membrane by about 1 to 20%. It is more preferable to relax the separation membrane by 5 to 15%. Relaxation makes it possible not only to prevent accumulation of internal stress in the membrane at the time of cooling and to enhance dimensional stability of the membrane, but also to further enhance crosslinking reactivity in a radiation exposure step which will be described later.

(Radiation Exposure Step)

The polymer chains of the thermoplastic resin are crosslinked by irradiating the membrane containing the thermoplastic resin as a main component, which is obtained in the above-described step, with radiation, whereby the average pore diameter converted from the NKP plot can be set to 0.1 nm to 0.6 nm.

The intensity and amount of the radiation to be irradiated are appropriately selected depending on the thickness, shape, and the like of the separation membrane to be produced. In addition, the atmosphere in which the radiation exposure is performed is not particularly limited, but it is more preferable to perform the irradiation exposure in an inert gas atmosphere since it is possible to suppress the decomposition of the polymer difference due to the irradiation and promote the crosslinking reaction.

Examples of the radiation to be used include an electron beam, an alpha ray, a beta ray, a gamma ray, an X-ray, a neutron ray, and the like, and among them, the electron beam and the gamma ray are more preferable from the viewpoint of easy handling and easy control of the crosslinking reaction.

In addition, the radiation exposure step preferably includes a step of heating after radiation exposure. By including the heating step, crosslinking between polymer chains further proceeds, and a membrane having a higher separation factor β can be obtained. Specifically, the treatment is preferably performed at room temperature to the glass transition temperature Tg of the thermoplastic resin +120°C, and when the thermoplastic resin contains PMP as a main component, the treatment is preferably performed at room temperature to 150°C.

(Module)

The separation membrane of the present invention obtained as described above can be filled into a case with a conventionally known method to form a module incorporating the separation membrane. For example, a hollow fiber membrane module includes a plurality of hollow fiber membranes and a cylindrical case. The plurality of hollow fiber membranes are bundled and inserted into a tubular case, and then the end portions thereof are fixed to the case and sealed with a thermosetting resin such as polyurethane or an epoxy resin. The end portion of the hollow fiber membrane cured with the thermosetting resin is cut to obtain an opening surface of the hollow fiber membrane, thereby producing a module. As a result, it is possible to provide a module capable of separating a gas having a high global warming potential.

(Separation Device)

The separation membrane module of the present invention obtained as described above can be incorporated into a gas separation process by a conventionally known method or the like to form a gas separation device incorporating the separation membrane module. For example, the gas separation device includes, as main components, a pump that sends gas and/or sucks gas, a pipe through which gas flows, and a gas separation module. As a result, it is possible to provide a gas separation device capable of separating a gas having a high global warming potential.

(Gas Separation Method)

Using the device of the present invention obtained as described above, gas separation can be performed by a conventionally known method or the like. For example, by introducing a mixed gas into a gas separation device and supplying the gas to a gas separation membrane module by a pump and/or sucking the gas from the gas separation membrane module by a pump, it is possible to separate a gas having a high global warming potential through the separation membrane module. Examples thereof include devices described in International Publication No. WO 2002/058826, Japanese Patent Laid-open Publication No. 2000-185212, Japanese Patent Laid-open Publication No. 11-345545, Japanese Patent Laid-open Publication No. 2005-161187, Japanese Patent Laid-open Publication No. 4-284814, and the like, but are not limited thereto. The separation membrane module may be used in a plurality of stages as necessary depending on the purity of the supplied gas and the purity required after separation.

EXAMPLES

Hereinafter, the present invention will be described more specifically with reference to Examples, but the present invention is not limited thereto at all.

[Measurement and Evaluation Methods]

The characteristic values in Examples were determined with the following methods.

A. Outer Diameter and Inner Diameter ($\mu$m) of Hollow Fiber Membrane

After the hollow fiber membranes were frozen with liquid nitrogen, a stress was applied (using a razor or a microtome as necessary), and the exposed radial cross sections were observed with an optical microscope. The average values of the outer diameter and the inner diameter at randomly selected ten positions were taken as the outer diameter and the inner diameter of the hollow fiber membranes, respectively.

B. Hollowness (%) of Hollow Fiber Membrane

From the outer diameter and the inner diameter determined in (1) above, the hollowness of the hollow fiber membrane was calculated with the following formula. Hollowness (%) = 100 $\times$ [inner diameter ($\mu$m$^2$)]$^2$/[outer diameter ($\mu$m$^2$)]$^2$

C. Gas Permeability (GPU)

A small module having an effective length of 100 mm composed of three hollow fiber membranes was produced. Specifically, three hollow fiber membranes were bundled and inserted into a plastic pipe as a cylindrical case, and then at the end portion of the hollow fiber membrane bundle, the gap between the membranes and the gap between the pipes were cured with a thermosetting resin and sealed. An opening surface of the hollow fiber membrane was obtained by cutting the end portion of the sealed hollow fiber membrane, and a small module for evaluation was produced. The gas permeation flow rate was measured using this small module. As the measurement gas, nitrogen, or $SF_6$ was used alone for evaluation, and the pressure change on the permeation side per unit time of carbon dioxide or nitrogen was measured by an external pressure method at a measurement temperature of 37°C in accordance with the pressure sensor method of JIS K7126-1(2006). Here, the pressure difference between the supply side and the permeation side was set to 100 kPa.

Subsequently, the gas permeation flow rate Q was calculated by the following Formula (6), and the value was defined as gas permeability. Here, as described above, J is a gas flux, d is a membrane thickness, and $P_H$ and $P_L$ are partial pressures on a gas supply side and a gas permeation side, respectively. GPU is a general unit indicating the gas permeation flow rate Q, and 1 GPU = 3.35 $\times$ 10$^{-10}$ mol/m$^2$·s·Pa. The ratio of the gas permeation flow rate Q of each component was defined as the separation factor $\beta$. The membrane area was calculated from the outer diameter and length in the region contributing to gas permeation.

[Mathematical Formula 6]

$$Q[GPU] = \frac{J}{3.35 \times 10^{-10}(P_H - P_L)} \quad \cdots\cdots \text{Formula (6)}$$

D. Average Pore Diameter (nm) Converted from NKP Plot

The gas permeability of nitrogen $N_2$ and helium He was calculated by the method C described above, and the separation factor $\beta$ ($N_2$/He), which is the ratio thereof, was determined. This value was substituted into the above-described Formula (2) to determine the average pore diameter. In addition, since the formula used for the calculation this time is a formula suitable only for a separation membrane having a separation function due to the molecular sieving effect, the formula is applied only to a separation membrane having no coarse pores on the outer surface, that is, a separation membrane in which surface pores are not confirmed by surface observation such as an SEM. Therefore, when the separation factor $\beta$ ($N_2$/He), which has coarse pores on the outer surface and is considered not to have a molecular sieving effect, was 2.7 or less, the measurement was impossible.

E. Separation Factor $\beta$ ($N_2$/$SF_6$) (nm)

The gas permeability of $SF_6$ and nitrogen was calculated by the method C described above, and the separation factor $\beta$ ($N_2$/$SF_6$), which is the ratio thereof, was obtained.

F. Dense Layer Thickness (um)

In the same manner as in the method A described above, the separation membrane was frozen with liquid nitrogen, and then a stress was applied (using a razor, a microtome, or a broad ion beam as necessary) to cut the separation membrane such that a radial cross section or a longitudinal cross section was exposed. Subsequently, in a case where the radial cross section or the longitudinal cross section is pretreated by being subjected to sputtering with platinum under the following conditions, and then observed with an SEM at a magnification of 10,000 times, when assuming that a straight line is drawn perpendicularly to the outer surface from any point on the outer surface of the separation membrane toward the inner surface side, the length of the straight line reaching the pore exceeding 10 nm for the first time is defined as the dense layer thickness. The extraction of pores is performed after the analysis image is binarized in image analysis software "ImageJ". In a case where the distribution of the number of pixels is expressed by the horizontal axis representing the luminance in the analysis image and the vertical axis representing the number of pixels in the luminance, when the number of pixels in the luminance with the highest number of pixels is A, binarization is performed in accordance with a point with small luminance among two points of luminance with the number of pixels being 1/2A. Furthermore, an image obtained by performing noise removal (corresponding to Despeckle in ImageJ) once on the obtained binarized image by replacing all pixels with the median value of 3 $\times$ 3 pixels in the vicinity of the pixel is used as an analysis image. A line perpendicular to the outer surface was drawn from any point on the outer surface of the obtained image toward the inner surface side, and the length until the pore exceeding 10 nm was reached for the first time was calculated. The measurement was performed at any 10 positions, and the average value thereof was adopted as the dense layer thickness.

(Sputtering)

Device: (E-1010) manufactured by Hitachi High-Technologies Corporation

Deposition time: 40 seconds
Current value: 20 mA
(SEM)
Device: (SU1510) manufactured by Hitachi High-Technologies Corporation
Acceleration voltage: 5 kV
Probe current: 30 pA
G. Porosity (%)

The fiber length L (mm) and the mass M (g) of the hollow fiber membrane vacuum-dried at 25°C for 8 hours were measured. The density $\rho_1$ (g/mm³) of the hollow fiber membrane was calculated with the following formula using the values of the outer diameter (mm) and the inner diameter (mm) measured in (1) above.

```
ρ₁ = M/[π × {(outer diameter/2)² - (inner diameter/2)²} × L]
```

The porosity $\varepsilon$ (%) was calculated with the following formula.

$$\varepsilon = 1 - \rho_1/\rho_2$$

Here, $\rho_2$ is the density of the polymer.

H. Average Porosity of Cross Section (%)

In the same manner as in the method A described above, the separation membrane was frozen with liquid nitrogen, and then a stress was applied (using a razor, a microtome, or a broad ion beam as necessary) to cut the separation membrane such that a radial cross section or a longitudinal cross section was exposed. Subsequently, sputtering was performed with platinum under the following conditions to perform pretreatment on the radial cross section or the longitudinal cross section, and then the ratio of pores having a major axis diameter of more than 10 nm relative to the visual field area was calculated when observation was performed at a magnification of 10,000 times using an SEM. The extraction of pores is performed after binarizing the analysis image (binarizing of Huang) in image analysis software "ImageJ". Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. Pore extraction was performed by an ImageJ Analyze Particles command, and the ratio of the total area of the obtained pores relative to the visual field area was calculated as the porosity. The measurement was performed at any five positions, and the average value thereof was taken as the average porosity of the cross section.

I. Average Pore Diameter $D_i$ (nm), Pore Diameter Variation Coefficient

In the same manner as in the method A described above, the separation membrane was frozen with liquid nitrogen, and then a stress was applied (using a razor, a microtome, or a broad ion beam as necessary) to cut the separation membrane such that a radial cross section or a longitudinal cross section was exposed. Subsequently, sputtering was performed with platinum under the following conditions to perform pretreatment on the radial cross section or the longitudinal cross section, and then when observed at a magnification of 10,000 times using an SEM, it was determined by extracting pores having a major axis diameter of more than 10 nm relative to the visual field area. The extraction of pores is performed after binarizing the analysis image (binarizing of Huang) in image analysis software "ImageJ". Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. Pore extraction was performed by an ImageJ Analyze Particles command, and the average pore diameter was calculated from the average area of the obtained pores. The measurement was performed on five regions obtained by dividing the separation membrane at equal intervals in order in the thickness direction such that each surface of the separation membrane was an end portion, and the average pore diameter of each region was defined as $D_1$ to $D_5$ in order from one side surface. For the 5 regions described above, the standard deviation of the pore diameters was divided by the arithmetic mean of the pore diameters and multiplied by 100 to obtain the variation coefficient.

J. Viscoelastic Properties, Slope A, $\tan\delta$ Peak Temperature at 10 Hz, 3/4 Position Width of $\tan\delta$ Peak at 10 Hz

The viscoelastic properties and the slope A were determined by the following procedures (1) to (3).

(1) The viscoelastic properties and the slope A were determined according to JIS-K7244 (1999) using a dynamic mechanical analysis device "DMS6100" manufactured by Seiko Instruments Inc. The viscoelastic properties at frequencies of 1 Hz, 10 Hz, and 100 Hz were evaluated under the measurement conditions of a tensile mode, a distance between chucks of 10 mm, a strain of 0.02 to 0.05%, and a temperature raising rate of 3°C/min.

(2) From the measurement results at each frequency, the temperature T at which $\tan\delta$ was maximum was determined, and the frequency F was plotted on the horizontal axis and the $\tan\delta$ maximum temperature T was plotted on the vertical axis. When there were a plurality of maximum temperatures, the temperature at which the maximum value (peak height) of $\tan\delta$ was the largest was defined as T.

(3) A logarithmic approximation Formula ($T = A \times \log_e (F) + B$) was obtained from the obtained plot, and the slope A of the formula was obtained.

(4) In addition, from the measurement result at 10 Hz, the temperature at which tanδ reached the maximum value was defined as the tanδ peak temperature at 10 Hz. In addition, the temperature at a height of 3/4 from the peak of the maximum value (peak height) of tanδ was determined on the low temperature side and the high temperature side with respect to the tanδ peak temperature, and the difference therebetween was defined as the 3/4 position width of the tanδ peak at 10 Hz.

[Thermoplastic Resin]

The following thermoplastic resins were prepared.
PMP: TPX DX845 (Density: 833 kg/m$^3$, MFR: 9.0 g/10 min)

[Another Raw Material]

Plasticizer: Dibutyl phthalate

(Example 1)

35 mass% of PMP and 65 mass% of dibutyl phthalate were supplied to a twin-screw extruder, melt-kneaded at 290°C, then introduced into a melt spinning pack at a spinning temperature of 245°C, and spun downward from the outer annular portion of the discharge spinneret having one spinneret hole (double circular tube type, discharge pore diameter: 2.0 mm). The spun hollow fiber was introduced into a triacetin cooling bath at 30°C, and wound up with a winder such that the draft ratio was 5.0. At that time, the air gap distance was set to 20 mm. Here, as a filter in the melt spinning pack, a metal filter having a diameter of 200 μm was used. The wound hollow fiber was introduced into a washing device including a plurality of rolls and washed with isopropanol. Thereafter, isopropanol was removed by vacuum drying at room temperature provided with a plurality of rolls. Subsequently, the resultant was introduced into a drying and cooling device including a plurality of rolls, dried at a temperature of 70°C, and then cooled to room temperature.

Next, the hollow fiber was irradiated with an electron beam at an irradiation intensity of 300 kV and an irradiation amount of 100 KGy in the air atmosphere to obtain a hollow fiber membrane. The obtained hollow fiber membrane had an outer diameter of 380 μm, an inner diameter of 200 μm, a hollowness of 28%, and a porosity of 55%.

Table 1 shows the physical properties of the obtained hollow fiber membrane. The selective separability between nitrogen and SF$_6$ was exhibited.

(Example 2)

A hollow fiber membrane was obtained in the same manner as in Example 1 except that the spun hollow fiber membrane was introduced into a triacetin cooling bath at 20°C for production. The obtained hollow fiber membrane had an outer diameter of 380 μm, an inner diameter of 200 μm, a hollowness of 28%, and a porosity of 55%. Table 1 shows the physical properties of the obtained hollow fiber membrane. A higher selective separability between nitrogen and SF$_6$ than that of Example 1 was exhibited.

(Example 3)

A hollow fiber membrane was obtained in the same manner as in Example 2 except that the hollow fiber membrane was produced by reducing the difference in peripheral speed of the roll by 10% during cooling after drying. The obtained hollow fiber had an outer diameter of 380 μm, an inner diameter of 200 μm, a hollowness of 28%, and a porosity of 55%. Table 1 shows the physical properties of the obtained hollow fiber membrane. A higher selective separability between nitrogen and SF$_6$ than that of Examples 1 and 2 was exhibited.

(Example 4)

A hollow fiber membrane was obtained in the same manner as in Example 3 except that the drying temperature was 100°C. The obtained hollow fiber had an outer diameter of 380 μm, an inner diameter of 200 μm, a hollowness of 28%, and a porosity of 55%. Table 1 shows the physical properties of the obtained hollow fiber membrane. A higher selective separability between nitrogen and SF$_6$ than that of Examples 1 to 3 was exhibited.

(Example 5)

A hollow fiber membrane was obtained in the same manner as in Example 4 except that the electron beam irradiation amount was 200 kGy. The obtained hollow fiber had an outer diameter of 380 $\mu$m, an inner diameter of 200 $\mu$m, a hollowness of 28%, and a porosity of 55%. Table 1 shows the physical properties of the obtained hollow fiber membrane. A higher selective separability between nitrogen and $SF_6$ than that of Examples 1 to 4 was exhibited.

(Example 6)

A hollow fiber membrane was obtained in the same manner as in Example 5 except that the hollow fiber membrane was produced with a nitrogen atmosphere during the atmosphere during electron beam irradiation. The obtained hollow fiber had an outer diameter of 380 $\mu$m, an inner diameter of 200 $\mu$m, a hollowness of 28%, and a porosity of 55%. Table 1 shows the physical properties of the obtained hollow fiber membrane. A higher selective separability between nitrogen and $SF_6$ than that of Examples 1 to 5 was exhibited.

(Example 7)

A hollow fiber membrane was obtained in the same manner as in Example 1 except that the hollow fiber membrane was produced with the electron beam irradiation amount of 25 kGy. The obtained hollow fiber had an outer diameter of 380 $\mu$m, an inner diameter of 200 $\mu$m, a hollowness of 28%, and a porosity of 55%. Table 2 shows the physical properties of the obtained hollow fiber membrane. Although the selective separability between nitrogen and $SF_6$ was lower than that in Examples 1 to 6, the selective separability was higher than that in Comparative Example.

(Example 8)

Hollow fiber membranes were obtained in the same manner as in Example 1 except that after electron beam irradiation, heating was performed at 100°C and then cooling was performed to room temperature. The obtained hollow fiber had an outer diameter of 380 $\mu$m, an inner diameter of 200 $\mu$m, a hollowness of 28%, and a porosity of 55%. Table 2 shows the physical properties of the obtained hollow fiber membrane. A higher selective separability between nitrogen and $SF_6$ than that of Examples 1 to 7 was exhibited.

(Example 9)

Hollow fiber membranes were obtained in the same manner as in Example 1 except that high-pressure low-density polyethylene was used as the resin to be used and the extrusion temperature was 200°C. The obtained hollow fiber had an outer diameter of 380 $\mu$m, an inner diameter of 200 $\mu$m, a hollowness of 28%, and a porosity of 55%. Table 2 shows the physical properties of the obtained hollow fiber membrane. Although the permeability of nitrogen is lower than that of Examples 1 to 8, a higher selective separability than that of Comparative Example was exhibited.

(Example 10)

Hollow fiber membranes were obtained in the same manner as in Example 1 except that polypropylene was used as the resin to be used and the extrusion temperature was 220°C. The obtained hollow fiber had an outer diameter of 380 $\mu$m, an inner diameter of 200 $\mu$m, a hollowness of 28%, and a porosity of 55%. Table 2 shows the physical properties of the obtained hollow fiber membrane. Although the permeability of nitrogen is lower than that of Examples 1 to 8, a higher selective separability than that of Comparative Example was exhibited.

(Comparative Example 1)

A hollow fiber membrane was obtained in the same manner as in Example 1 except that the electron beam irradiation step was not performed. The obtained hollow fiber had an outer diameter of 380 $\mu$m, an inner diameter of 200 $\mu$m, a hollowness of 28%, and a porosity of 55%. Table 2 shows the physical properties of the obtained hollow fiber membrane. The hollow fiber membrane had a lower selective separability between nitrogen and $SF_6$ as compared to Examples.

[Table 1]

| | | Example 1 | Example 2 | Example 3 | Example 4 | Example 5 | Example 6 |
|---|---|---|---|---|---|---|---|
| Average pore diameter converted from NKP plot | [nm] | 0.59 | 0.57 | 0.55 | 0.52 | 0.52 | 0.5 |
| Presence or absence of dense layer | [-] | Present | → | → | → | → | → |
| Dense layer thickness | [$\mu$m] | 1.8 | 1.8 | 1.8 | 1.8 | 1.8 | 1.8 |
| Dense layer position | [-] | (b) D1 | (b) D1 | (b) D1 | (b) D1 | (b) D1 | (b) D1 |
| Average porosity of cross section | [%] | 50 | 40 | 42 | 43 | 43 | 43 |
| slope A | [-] | 1.45 | 1.7 | 2.1 | 2.6 | 2.8 | 3 |
| 3/4 position width of tan $\delta$ peak at 10 Hz | [°C] | 18 | 19 | 20 | 21 | 22 | 23 |
| tan$\delta$ peak temperature at 10 Hz | [°C] | 48 | 49 | 50 | 52 | 53 | 55 |
| Pore diameter variation coefficient $\alpha1/\alpha2/\alpha3/\alpha4/\alpha5$ | [%] | 210/120/170/100/160 | 90/85/80/75/100 | 90/85/80/75/100 | 90/85/80/75/100 | 90/85/80/75/100 | 90/85/80/75/100 |
| Average pore diameter Di D1/D2/D3/D4/D5 | [nm] | 180/200/245/265/210 | 150/165/220/230/240 | 155/160/225/235/245 | 160/165/230/240/250 | 160/165/230/240/250 | 160/165/230/240/250 |
| (a) D1 ≥ D2 ≥ D3 ≥ D4 ≥ D5 (b) D5 ≥ D4 ≥ D3 ≥ D2 ≥ D1 | [-] | × | ○ | ○ | ○ | ○ | ○ |
| Shape | [-] | Hollow fiber | Hollow fiber | Hollow fiber | Hollow fiber | Hollow fiber | Hollow fiber |
| $N_2$ permeability | [GPU] | 30 | 30 | 30 | 30 | 30 | 30 |

(continued)

|  | | Example 1 | Example 2 | Example 3 | Example 4 | Example 5 | Example 6 |
|---|---|---|---|---|---|---|---|
| Separation factor β ($N_2$/$SF_6$) | [-] | 10 | 15 | 20 | 25 | 50 | 60 |

[Table 2]

| | | Example 7 | Example 8 | Example 9 | Example 10 | Comparative Example 1 |
|---|---|---|---|---|---|---|
| Average pore diameter converted from NKP plot | [nm] | 0.6 | 0.47 | 0.43 | 0.43 | 0.61 |
| Presence or absence of dense layer | [-] | → | → | → | → | → |
| Dense layer thickness | [μm] | 1.8 | 1.8 | 1.8 | 1.8 | 1.8 |
| Dense layer position | [-] | (b) D1 | (b) D1 | (b) D1 | (b) D1 | (b) D1 |
| Average porosity of cross section | [%] | 40 | 43 | 50 | 50 | 50.9 |
| Slope A | [-] | 1.34 | 3.3 | 1.43 | 1.42 | 1.3 |
| 3/4 position width of tan δ peak at 10 Hz | [°C] | 18 | 25 | 33 | 28 | 17 |
| tanδ peak temperature at 10 Hz | [°C] | 48 | 58 | -20 | 11 | 47 |
| Pore diameter variation coefficient $\alpha1/\alpha2/\alpha3/\alpha4/\alpha5$ | [%] | 90/85/80/75/100 | 90/85/80/75/100 | 200/120/160/100/150 | 205/125/160/100/155 | 210/120/170/100/160 |
| Average pore diameter Di D1/D2/D3/D4/D5 | [nm] | 180/200/245/265/210 | 160/165/230/240/250 | 170/190/220/240/200 | 175/195/220/240/210 | 180/200/245/265/210 |
| (a) D1 ≥ D2 ≥ D3 ≥ D4 ≥ D5 (b) D5 ≥ D4 ≥ D3 ≥ D2 ≥ D1 | [-] | × | ○ | × | × | × |
| Shape | [-] | Hollow fiber | Hollow fiber | Hollow fiber | Hollow fiber | Hollow fiber |
| $N_2$ permeability | [GPU] | 30 | 25 | 2 | 1 | 50 |
| Separation factor β ($N_2/SF_6$) | [-] | 8 | 80 | 20 | 25 | 3 |

INDUSTRIAL APPLICABILITY

The separation membrane, the separation membrane module, the separation device, and the gas separation method of the present invention can be suitably used for the purpose of separating and recovering a gas having a high global warming potential. For example, it is extremely useful for the separation and recovery of methane generated in semiconductor manufacturing, metal refining, electrical product manufacturing step, gas recovery step from discarded electrical products, and the like, and gases having a high global warming potential such as PFC, $SF_6$, HFC, $NF_3$, and CFC, and for methane purification in biomethane manufacturing.

**Claims**

1. A separation membrane comprising a thermoplastic resin as a main component, wherein an average pore diameter converted from an NKP plot is 0.1 nm to 0.6 nm.

2. The separation membrane according to claim 1, wherein the thermoplastic resin contains poly(4-methyl-1-pentene) as a main component.

3. The separation membrane according to claim 1 or 2, wherein in dynamic mechanical analysis, when measurement is performed while a frequency is changed in a range of 1 to 100 Hz, a slope A of a logarithmic approximation obtained from a frequency F and a $\tan\delta$ peak temperature T plot is 1.4 or more.

4. The separation membrane according to any one of claims 1 to 3, wherein a width at a 3/4 position from a $\tan\delta$ peak height when measured at a frequency of 10 Hz in the dynamic mechanical analysis is 19°C or more.

5. The separation membrane according to any one of claims 1 to 4, wherein when each region obtained by dividing the separation membrane into five regions at equal intervals in order from one surface of the separation membrane in the thickness direction is defined as 1 to 5, a coefficient of variation $\alpha_i$ of an average pore diameter in each region of the regions 1 to 5 is 150% or less.

6. The separation membrane according to claim 5, wherein when each region obtained by dividing the separation membrane into five regions at equal intervals in order from one surface of the separation membrane in the thickness direction is defined as 1 to 5, an average pore diameter $D_i$ (i represents an integer of 1 to 5) in each region of the regions 1 to 5 satisfies requirement (a) or (b) below:

$$(a)\, D_1 \geq D_2 \geq D_3 \geq D_4 \geq D_5;$$

$$(b)\, D_5 \geq D_4 \geq D_3 \geq D_2 \geq D_1.$$

7. The separation membrane according to any one of claims 1 to 6, wherein an average porosity of the cross section of the separation membrane is 25% to 50%.

8. The separation membrane according to any one of claims 1 to 7, wherein the separation membrane has a dense layer.

9. The separation membrane according to any one of claims 1 to 8, wherein the thickness of the dense layer is in a range of 0.1 $\mu$m to 2.0 $\mu$m.

10. The separation membrane according to any one of claims 1 to 8, wherein the dense layer is on at least one surface side.

11. The separation membrane according to any one of claims 1 to 10, wherein a ratio of $N_2$ permeability to $SF_6$ permeability at 100 kPa (separation factor $\beta$ ($N_2/SF_6$)) of the separation membrane is 10 or more.

12. The separation membrane according to any one of claims 1 to 11, wherein the $N_2$ permeability at 100 kPa of the separation membrane is 5 GPU or more.

13. The separation membrane according to any of claims 1 to 12, wherein the separation membrane has a hollow fiber shape.

14. The separation membrane according to claim 13, wherein the surface having the dense layer is an outer surface of a separation membrane having a hollow fiber shape.

15. A separation membrane module comprising the separation membrane according to any one of claims 1 to 14.

16. A separation device comprising: the separation membrane module according to claim 15; and a pump for supplying a gas and/or a pump for sucking a gas.

17. A gas separation method using the separation device according to claim 16.

18. The gas separation method according to claim 17, wherein the gas is a gas used in at least one step selected from semiconductor manufacturing, metal refining, electrical product manufacturing, and biomethane manufacturing, or a gas recovered from discarded electrical products.

19. A separation membrane manufacturing method, comprising the following steps (1) to (4):

   (1) a preparation step of melt-kneading a resin mixture including 10 mass% or more and 50 mass% or less of a thermoplastic resin, and 50 mass% or more and 90 mass% or less of a plasticizer to obtain a resin composition;
   (2) a molding step of melting the resin composition, discharging the resin composition from a discharge spinneret, and cooling the resin composition in a cooling bath to obtain a resin molded product;
   (3) a washing step of extracting the plasticizer contained in the resin molded product into a solvent to obtain a resin molded product from which the plasticizer has been removed; and
   (4) a radiation exposure step of irradiating the resin molded product from which the plasticizer has been removed with radiation.

20. The separation membrane manufacturing method according to claim 19, wherein

   the solvent has
   a solubility parameter distance Ra to the resin molded product in a range of 8 to 35, and
   a solubility parameter distance Rb to the plasticizer is in a range of 5 to 35.

21. The separation membrane manufacturing method according to claim 19 or 20, wherein the thermoplastic resin has poly(4-methyl-1-pentene) as a main component.

22. The separation membrane manufacturing method according to any one of claims 19 to 21, further comprising a heating step of heating to a temperature equal to or more than the glass transition temperature of the thermoplastic resin after the washing step and before the radiation exposure step.

23. The separation membrane manufacturing method according to claim 19 to 22, wherein the radiation is an electron beam and/or a gamma ray.

Fig. 1

Membrane surface

5.00μm

Fig. 2

Membrane surface

Fig. 3

Membrane surface

Dense layer thickness

## INTERNATIONAL SEARCH REPORT

| International application No. |
|---|
| **PCT/JP2024/012251** |

**A.    CLASSIFICATION OF SUBJECT MATTER**

***B01D 71/26***(2006.01)i; ***B01D 53/22***(2006.01)i; ***B01D 63/02***(2006.01)i; ***B01D 69/00***(2006.01)i; ***B01D 69/02***(2006.01)i;
***B01D 69/08***(2006.01)i; ***C08J 7/00***(2006.01)i; ***C08J 9/26***(2006.01)i; ***C08J 9/36***(2006.01)i
FI:    B01D71/26; B01D53/22; B01D63/02; B01D69/00; B01D69/02; B01D69/08; C08J7/00 301; C08J7/00 305; C08J9/26
102; C08J9/36 CES

According to International Patent Classification (IPC) or to both national classification and IPC

**B.    FIELDS SEARCHED**

Minimum documentation searched (classification system followed by classification symbols)

B01D71/26; B01D53/22; B01D63/02; B01D69/00; B01D69/02; B01D69/08; C08J7/00; C08J9/26; C08J9/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | WO 2022/230923 A1 (TORAY INDUSTRIES, INC.) 03 November 2022 (2022-11-03) claims, paragraphs [0013], [0080]-[0084], [0117]-[0147], fig. 1-5 | 1-18 |
| Y | | 1-23 |
| Y | JP 2022-129937 A (NATIONAL UNIVERSITY CORPORATION KOBE UNIVERSITY) 06 September 2022 (2022-09-06) claims, paragraphs [0049]-[0053], [0074] | 1-18 |
| Y | JP 2017-044654 A (RESEARCH INSTITUTE OF INNOVATIVE TECHNOLOGY FOR THE EARTH) 02 March 2017 (2017-03-02) claims, paragraphs [0001]-[0006], [0071] | 1-18 |

☑ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/012251**

C. DOCUMENTS CONSIDERED TO BE RELEVANT

| Category* | Citation of document, with indication, where appropriate, of the relevant passages | Relevant to claim No. |
|---|---|---|
| Y | 金指正言, Normalized Knudsen-based Permeance(NKP)法によるアモルファスシリカ膜の細孔径評価, 膜, 2016, vol. 41, no. 1, pp. 36-43, (KANEZASHI, Masakoto, Pore size evaluation for amorphous silica membranes by normalized knudsen-based permeance (NKP), Membrane)<br>p. 37, right column to p. 40, left column | 1-18 |
| Y | WO 02/072248 A1 (ASAHI KASEI KABUSHIKI KAISHA) 19 September 2002 (2002-09-19)<br>claims, p. 17, lines 9-21, example 6 | 19-23 |
| X | JP 6-210146 A (DAINIPPON INK & CHEMICALS INC.) 02 August 1994 (1994-08-02)<br>claims, paragraphs [0010], [0044]-[0057], fig. 1-5 | 1-18 |
| Y | | 1-18 |
| X | JP 59-196706 A (DAINIPPON INK & CHEMICALS INC.) 08 November 1984 (1984-11-08)<br>claims, p. 6, upper left column, line 7 to p. 8, lower right column, line 14, examples | 1-18 |
| Y | | 1-18 |

Form PCT/ISA/210 (second sheet) (July 2022)

**INTERNATIONAL SEARCH REPORT**
Information on patent family members

| International application No. |
| --- |
| **PCT/JP2024/012251** |

| Patent document cited in search report | | | Publication date (day/month/year) | Patent family member(s) | Publication date (day/month/year) |
| --- | --- | --- | --- | --- | --- |
| WO | 2022/230923 | A1 | 03 November 2022 | EP 4331715 A1 <br> claims, paragraphs [0014], <br> [0084]-[0088], [0120]-[0168], <br> fig. 1-5 <br> KR 10-2024-0000455 A | |
| JP | 2022-129937 | A | 06 September 2022 | (Family: none) | |
| JP | 2017-044654 | A | 02 March 2017 | (Family: none) | |
| WO | 02/072248 | A1 | 19 September 2002 | JP 4012822 B2 | |
| JP | 6-210146 | A | 02 August 1994 | (Family: none) | |
| JP | 59-196706 | A | 08 November 1984 | US 4664681 A <br> claims, column 5, line 59 to <br> column 9, line 61, examples <br> EP 124028 A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002058826 A
- JP 11345545 A
- JP 2000185212 A

- JP 2005161187 A
- JP 4284814 A

**Non-patent literature cited in the description**

- *Membrane*, 2011, vol. 383, 152-158
- *Ind. Eng. Chem. Res.*, 2011, vol. 50, 3798-3817

- **CHARLES HANSEN**. Hansen Solubility Parameter in Practice. *Ind. Eng. Chem. Res.*, 2011, vol. 50, 3798-3817